# EUROPÄISCHE PATENTANMELDUNG

(11) **EP 4 786 404 A1**
(43) Veröffentlichungstag der Anmeldung: **05.08.2026**
(21) Anmeldenummer: 25218202.7
(22) Anmeldetag: 25.11.2025
(51) Int. Cl.: B66F 17/00, G01S 17/931, G06V 20/58

(54) **VERFAHREN, SYSTEM UND SOFTWARE ZUR HINDERNISERKENNUNG FÜR EIN FLURFÖRDERZEUG SOWIE FLURFÖRDERZEUG**

(30) Priorität: 30.01.2025 DE 102025103336
(71) Anmelder: Jungheinrich AG, 22047 Hamburg (DE)
(72) Erfinder: BRUSS, Benjamin, 22397 Hamburg (DE); ROLINK, Jérôme, 23843 Bad Oldesloe (DE); WETEGROVE, Ralf, 22850 Norderstedt (DE); WULFF, Tom, 25336 Elmshorn (DE)
(74) Vertreter: Seemann & Partner Patentanwälte mbB

(57) **Zusammenfassung**

Die Erfindung betrifft ein Verfahren zur Hinderniserkennung für ein Flurförderzeug (10) mit einer Steuervorrichtung (12) und einer 3D-Sensorvorrichtung (14). Die Erfindung betrifft ferner ein System und eine Software zur Hinderniserkennung sowie ein Flurförderzeug (10).

Die 3D-Sensorvorrichtung (14) nimmt während des Betriebs des Flurförderzeugs (10) 3D-Daten (100) mit einer Mehrzahl von 3D-Datenpunkten von Teilen der Umgebung des Flurförderzeugs (10) und übermittelt diese an die Steuervorrichtung (12), wobei die Steuervorrichtung (12) die 3D-Daten (100) einerseits in 3D-Datenpunkte unterteilt, die eine Position oder Positionen befahrbarer Flächen (18, 30) darstellen und andererseits in solche 3D-Datenpunkte, die eine Position oder Positionen nicht befahrbarer Hindernisse (20) darstellen. Das Flurförderzeug (10) wird so betrieben, dass es nicht befahrbare Hindernisse (20) vermeidet.

## Beschreibung

Die Erfindung betrifft ein Verfahren zur Hinderniserkennung für ein Flurförderzeug mit einer Steuervorrichtung und einer 3D-Sensorvorrichtung. Die Erfindung betrifft ferner ein System und eine Software zur Hinderniserkennung sowie ein Flurförderzeug.

Die Überwachung der Umgebung von Flurförderzeugen zur Vermeidung von Kollisionen mit Hindernissen in der Lagerumgebung gehört zu den Aufgaben aktueller Sensor- und Steuersysteme an Flurförderzeugen, und zwar sowohl bei von Fahrern gesteuerten als auch bei fahrerlosen Flurförderzeugen. Dafür verfügen moderne Flurförderzeuge über Systeme mit einer Sensorik zur Überwachung der Umgebung, die auf bildgebenden Kameras beruhen können, jedoch können auch 3D-Sensoriken wie LiDAR-Scanner oder TOF-Kameras zum Einsatz kommen, deren Aufnahmen der Umgebung von einer zentralen Recheneinheit verarbeitet werden, und die eine Warnung aussenden oder das Fahrzeug abbremsen, wenn ein Hindernis im Weg des Fahrzeugs erkannt wird.

Eine technische Lösung beruht beispielsweise auf einer ebenenbasierten Schutzfeldüberwachung, beispielsweise mit 2D-LiDAR-Sensoren. Die Messung erfolgt allerdings nur in einer Ebene. Objekte ober- oder unterhalb dieser Ebene werden nicht erfasst.

Alternativ gibt es die volumetrische Raumüberwachung mit 3D-Sensoren, beispielsweise LiDAR, TOF- oder Stereokameras, Radar oder Ultraschall. Hier beruht die Objektdetektion auf der senkrechten Höhe eines Objekts. Das Rauschverhalten von Sensoren kann dazu führen, dass kleine oder flache Objekte im Rauschen untergehen. Weiter ist es notwendig, das untere Volumenende nahe dem Boden zu definieren. Fahrzeugabnutzung oder Neigung kann dazu führen, dass das Detektionsvolumen in die Bodenabbildung eintaucht und eine Fehlauslösung resultiert oder das Volumen nach oben geneigt wird und flache Hindernisse nicht mehr erfasst werden. Volumen werden in bekannten Systemen absolut zum Sensor definiert und der Sensor zum Flurförderzeug einmalig kalibriert. Alle bekannten Methoden basieren auf einer festen einmaligen Kalibrierung der Sensorposition.

Der Erfindung liegt demgegenüber die Aufgabe zugrunde, bekannte Methoden zur Hinderniserkennung zu verbessern und auch kleine oder flache Objekte am Boden zu detektieren, um eine Kollision oder ein Überfahren zu vermeiden.

Diese Aufgabe wird gelöst durch ein Verfahren zur Hinderniserkennung für ein Flurförderzeug mit einer Steuervorrichtung und einer 3D-Sensorvorrichtung, die während des Betriebs des Flurförderzeugs 3D-Daten mit einer Mehrzahl von 3D-Datenpunkten von Teilen der Umgebung des Flurförderzeugs aufnimmt und diese an die Steuervorrichtung übermittelt, wobei die Steuervorrichtung die 3D-Daten einerseits in 3D-Datenpunkte unterteilt, die eine Position oder Positionen befahrbarer Flächen darstellen und andererseits in solche 3D-Datenpunkte, die eine Position oder Positionen nicht befahrbarer Hindernisse darstellen, wobei das Flurförderzeug so betrieben wird, dass es nicht befahrbare Hindernisse vermeidet.

Die Kategorisierung erlaubt eine kontinuierliche Einschätzung befahrbarer Flächen im lagertypischen Umfeld, also beispielsweise Fahrwege, Böden oder Rampen. Da die 3D-Daten auch die Lage befahrbarer Flächen, also typischerweise eines ebenen Bodens, beschreiben, lassen anhand von Änderungen gegenüber früheren Messungen auch Rückschlüsse auf eine Verstellung der 3D-Sensorvorrichtung gewinnen und gegebenenfalls zuvor erfolgte Kalibrationen der 3D-Sensorvorrichtung automatisch anpassen bzw. die gewonnen 3D-Daten durch eine einfache Transformation in das für die Steuerung des Flurförderzeugs verwendete Koordinatensystem überführen lassen.

In einer Ausführungsform des Verfahrens nimmt eine Kamera, insbesondere eine RGB-Kamera, die in einer bekannten Positionsbeziehung relativ zur 3D-Sensorvorrichtung am Flurförderzeug angeordnet ist, 2D-Bilder von Teilen der Umgebung des Flurförderzeugs auf, welche wenigstens teilweise auch von der 3D-Sensorvorrichtung aufgenommen werden, und übermittelt die 2D-Bilder an die Steuervorrichtung, wobei die Steuervorrichtung die folgenden Schritte ausführt:
- Erstellen einer 2D-Filtermaske durch eine semantische Segmentierung der 2D-Bilder in Bereiche, die einerseits die befahrbaren Flächen und andererseits die nicht befahrbaren Hindernisse darstellen, mittels einer dazu trainierten Instanz einer künstlichen Intelligenz, insbesondere eines neuronalen Faltungsnetzwerks (CNN), wobei jedem Pixel der 2D-Filtermaske entsprechend einem Ergebnis der semantischen Segmentierung für das entsprechende Pixel ein einer befahrbaren Fläche oder ein einem nicht befahrbaren Hindernis entsprechender Maskenwert zugewiesen wird, und
- Übertragen der semantischen Segmentation auf die 3D-Daten, wobei für jeden 3D-Datenpunkt aus den aufgenommenen 3D-Daten der Umgebung des Flurförderzeugs unter Verwendung der bekannten Positionsbeziehung zwischen der Kamera und der 3D-Sensorvorrichtung am Flurförderzeug sowie bekannten Abbildungseigenschaften der Kamera zurückprojiziert wird, in welchem Pixel eines zeitlich entsprechenden von der Kamera aufgenommenen 2D-Bildes der jeweilige 3D-Datenpunkt abgebildet würde, und dem jeweiligen 3D-Datenpunkt der Maskenwert des so ermittelten Pixels der 2D-Filtermaske zugewiesen wird.

Diese zweistufige Ausführungsform des Verfahrens verbindet die dreidimensionalen Positionsinformationen aus den 3D-Daten der 3D-Sensorvorrichtung mit der Kl-gestützten Bildanalyse der 2D-Bilder von der Kamera. Die Instanz der künstlichen Intelligenz (KI) wird mittels annotierten Trainingsbildern trainiert, lagerumfeldtypische befahrbare Flächen von Hindernissen durch semantische Segmentierung, auch als Klassifizierung bezeichnet, zu unterscheiden. Solche Trainingsbilder können entweder reale Bilder sein, die händisch oder mit der Unterstützung von entsprechenden Tools annotiert worden sind, oder künstliche Bilder, in denen beispielsweise mit CAD-Programmen typische Lagerumgebungen erstellt und möglichst realistisch gerendert werden. Hiermit lassen sich mit überschaubarem Aufwand verlässliche Segmentierungsergebnisse erzielen.

Den 2D-Bildern fehlt allerdings noch die 3D-Information, die für die Steuerung eines Flurförderzeugs benötigt werden. Deshalb werden in der beschriebenen Ausführungsform von der 3D-Sensorvorrichtung, beispielsweise einer LiDAR-Scanvorrichtung, einer TOF-Kamera, gegebenenfalls aber auch einer Stereokamera, einer Radar- oder einer Ultraschall-Sensorvorrichtung, erzeugten 3D-Daten der Umgebung des Flurförderzeugs in das System der Kamera zurückgerechnet, um herauszufinden, welchem Pixel des 2D-Bildes ein 3D-Datenpunkt entspricht. Diese Rückprojektion beruht auf bekannten geometrischen Erwägungen bezüglich der Positionen und Ausrichtungen (Posen) der 3D-Sensorvorrichtung und der Kamera im Verhältnis zueinander sowie der Kenntnis der Projektionsmatrix der Kameraoptik als Ausdruck von deren Abbildungseigenschaften. Wenn das Pixel bekannt ist, kann dem 3D-Datenpunkt der Maskenwert der 2D-Filtermaske an diesem Pixel zugewiesen werden.

Mögliche Ergebnisse der Rückprojektion können sein, dass ein 3D-Datenpunkt in einem Pixel des 2D-Bildes abgebildet würde, das einer befahrbaren Fläche entspricht, oder einem Pixel, das einem nicht befahrbaren Hindernis entspricht, oder außerhalb des im 2D-Bild abgebildeten Bereich liegen würde. Im letztgenannten Fall wird der 3D-Datenpunkt nicht weiter für die Steuerung des Flurförderzeugs berücksichtigt, da sich keine Aussage treffen lässt.

Sowohl die 3D-Sensorvorrichtung als auch die Kamera nehmen im Betrieb des Flurförderzeugs laufend Scans oder Bilder der Umgebung auf, wenn auch nicht notwendigerweise vollständig synchron. Daher kann ein "zeitlich entsprechendes" 2D-Bild, zu welchem eine semantische Segmentierung erfolgt ist, zu einem Zeitpunkt aufgenommen worden sein, der innerhalb eines Zeitfensters vom Zeitpunkt der Aufnahme der entsprechenden 3D-Daten liegt, sodass die 2D-Filtermaske aktuell ist. Die Zeitpunkte können als Zeitstempel in den Metadaten der 2D-Bilder und der 3D-Daten festgehalten werden.

Das Zeitfenster kann entweder fest vorgegeben sein oder von der Geschwindigkeit des Flurförderzeugs abhängen, wobei bei hoher Geschwindigkeit ein engeres Zeitfenster gewählt wird als bei niedriger Geschwindigkeit oder Stillstand des Flurförderzeugs. Damit wird sichergestellt, dass die 2D-Filtermaske, die auf die 3D-Daten angewandt wird, auch tatsächlich praktisch anwendbar ist und nicht durch eine zu große Eigenbewegung des Flurförderzeugs inzwischen nicht mehr passt. Geeignete Werte für die Breite des Zeitfensters lassen sich mit Überlegungen oder einigen Versuchsrechnungen bezüglich der Wiederholungsraten der Aufnahmen einerseits und Auswirkungen von Fahrzeuggeschwindigkeiten im kritischen Nahumfeld des Flurförderzeugs andererseits ermitteln, wo Fahrzeugbewegungen aus geometrischen Gründen die größten relativen Verschiebungen erzeugen. So kann beispielsweise eine typische Höchstgeschwindigkeit von Flurförderzeugen in Lagerumgebungen bei ca. 2.5 m/s und ein maximaler Bremsweg von 2.5 m angenommen werden. Bei schnelleren oder langsameren Flurförderzeugen können entsprechend andere Parameter angenommen werden.

Ebenso kann es aus Gründen der verfügbaren Rechenkapazität vorteilhaft sein, die Rückprojektion in den meisten Fällen, beispielsweise in 9 von 10 Fällen, auf die 3D-Datenpunkte der 3D-Daten in einem vordefinierten Bereich in der nahen Umgebung des Flurförderzeugs, beispielsweise innerhalb von bis zu 3 oder bis zu 5 Metern von der Position der 3D-Sensorvorrichtung, zu beschränken und nur in größeren Abständen, beispielsweise jedes zehnte Mal oder einmal pro Sekunde, den vollen Satz der 3D-Datenpunkte der jeweils aktuellen 3D-Daten auszuwerten.

In einem alternativen oder zusätzlichen Verfahren werden die 3D-Daten der 3D-Sensorvorrichtung als Eingangsdaten, insbesondere in Form von Punktwolken, in ein neuronales Netz eingespeist, welches eine semantische Segmentierung der 3D-Daten in 3D-Datenpunkte befahrbarer Flächen und in 3D-Datenpunkte von nicht befahrbaren Hindernissen ausführt, wobei das neuronale Netz insbesondere in einem weiter unten beschriebenen Verfahren trainiert worden ist.

Im Gegensatz zu der zuerst beschriebenen Ausführungsform ist hierbei keine Kamera notwendig, die semantisch zu segmentierende 2D-Bilder liefert, sondern die 3D-Daten werden als solche semantisch segmentiert. Da es sich dabei nicht um 2D-Bilder handelt, ist eine generellere Art von neuronalen Netzen notwendig, die 3D-Daten zu verarbeiten. Verschiedene Netzarchitekturen von neuronalen Netzen können geeignet sein. Beispielhaft erwähnt seien Transformer-basierte Ansätze wie Point Transformer V3, beschrieben in Xiaoyang Wu et al., "Point Transformer V3: Simpler Faster Stronger", in: Proceedings of the IEEE/CVF Conference on Computer Vision and Pattern Recognition, 2024, S. 4840 - 4851, oder SphereFormer, beschrieben in Xin Lai et al., "Spherical transformer for lidar-based 3d recognition", in: Proceedings oft he IEEE/CVF Conference on Computer Vision an Pattern Recognition, 2023, S. 17545 - 17555.

Eine direkte semantische Segmentation der von der 3D-Sensorvorrichtung erzeugten 3D-Daten hat den Vorteil, dass die Notwendigkeit einer Kamera und des Abgleichs mit einer 2D-Filtermaske entfällt. Diese können allerdings zusätzlich vorhanden sein bzw. durchgeführt werden, zur Steigerung der Robustheit der semantischen Segmentierung mittels Redundanz. Ferner können die mittels Rückprojektion auf die 2D-Filtermasken annotierten 3D-Daten auch zum Trainieren einer entsprechenden Machine Learning Instanz verwendet werden. Weitere Informationen zum Training der Instanz künstlicher Intelligenz sowie Problemstellungen hierzu sind weiter unten im Zusammenhang mit der Beschreibung eines Verfahrens zum Trainieren beschrieben.

Unabhängig davon, ob die semantische Segmentierung anhand einer 2D-Filtermaske oder an den 3D-Daten direkt erfolgt, kann vorgesehen sein, dass nur solche 3D-Datenpunkte, die eine Position oder Positionen von nicht befahrbaren Hindernissen darstellen, an ein System oder eine Funktion zur Hindernisauswertung weitergeleitet werden. So lassen sich existierende Steuerprogramme, die auf einer herkömmlichen Erkennung von Hindernissen basieren, weiternutzen. Beispielsweise können solche einem Hindernis entsprechende 3D-Datenpunkte mit einem übergeordneten System oder mit übergeordneter Funktion verarbeitet werden, insbesondere zum Vergleich mit vordefinierten Schutzvolumina.

In weiteren Ausführungsformen des Verfahrens werden die als befahrbaren Flächen zugehörig erkannten 3D-Datenpunkte daraufhin ausgewertet, ob sich die Position oder Pose der 3D-Sensorvorrichtung am Flurförderzeug gegenüber früheren Aufnahmen geändert hat, beispielsweise jenseits eines akzeptablen Grenzwerts von beispielsweise 5°. Schräge befahrbare Rampen sind von einer solchen Analyse vorzugsweise auszunehmen, es sei denn, ihre Neigung und Ausrichtung ist im System des Flurförderzeugs bekannt. In einem solchen Fall kann eine Mitteilung an einen Fahrer oder einen Wartungstechniker abgegeben werden, auf die hin die 3D-Sensorvorrichtung in ihre ursprüngliche Position gebracht wird oder eine erneute Kalibrierung erfolgt. Alternativ kann die ermittelte Verschiebung bzw. Verdrehung auch bei der Umrechnung der 3D-Daten in ein zur Steuerung des Flurförderzeugs verwendetes Koordinatensystem als zusätzliche Transformation berücksichtigt werden. Die fortlaufende Erkennung der Position des ebenen Bodens kann dazu verwendet werden, die Parameter dieser zusätzlichen Transformation der 3D-Daten zu überwachen und gegebenenfalls anzupassen.

In Ausführungsformen umfasst der Betrieb des Flurförderzeugs, dass es nicht befahrbare Hindernisse vermeidet, dass bei einem fahrergesteuerten Flurförderzeug eine akustische und/oder optische Warnung an den Fahrer erzeugt wird oder eine direkte Fahrzeugsteuerung, insbesondere Bremsung oder Umfahrung, erfolgt, oder bei einem fahrerlosen Flurförderzeug eine direkte Fahrzeugsteuerung, insbesondere Bremsung oder Umfahrung, erfolgt.

Wie oben beschrieben, kann es sein, dass für das Training einer Instanz einer künstlichen Intelligenz zur semantischen Segmentierung der 3D-Daten der 3D-Sensorvorrichtung ein hierfür angepasstes Trainingsverfahren zur Anwendung kommt, das gegebenenfalls über ein einfaches Supervised Learning an annotierten Trainingsdaten hinausgeht.

Ein erster Aspekt des Trainings betrifft, insbesondere in Verbindung mit dem oben beschriebenen Verfahren, ein Verfahren zum Trainieren eines neuronalen Netzes, insbesondere zur Verwendung in einem oben beschriebenen Verfahren in der Variante der semantischen Segmentierung der 3D-Daten direkt und ohne Umweg über eine 2D-Filtermaske, wobei ein Supervised Learning anhand von künstlich erzeugten und gelabelten 3D-Trainingsdaten stattfindet, wobei zur Erzeugung der 3D-Trainingsdaten wiederholt Lagerhallen mit in den Lagerhallen in verschiedenen Konfigurationen verteilten Objekten und Strukturen simuliert werden, die insbesondere in realen Lagerhallen vorkommen, wobei 3D-Trainingsdatensätze mit 3D-Trainingsdatenpunkten jeweils mittels einer Simulation einer in der jeweiligen simulierten Lagerhalle, und insbesondere an einem simulierten Flurförderzeug, mit wechselnden Positionen und/oder Posen positionierten 3D-Sensorvorrichtung entsprechend einer an einem realen Flurförderzeug vorhandenen 3D-Sensorvorrichtung erzeugt werden, wobei die künstlich erzeugten 3D-Trainingsdatenpunkte entsprechend einer Eigenschaft, insbesondere einem Objekt-Identifkator, gelabelt werden, die einen Rückschluss darauf erlaubt, ob die 3D-Trainingsdatenpunkte von einem simulierten Hindernis-Objekt oder einer simulierten befahrbaren Fläche stammen.

Diese automatisierte Erstellung künstlicher Trainingsdaten umgeht die Problematik, dass die Erstellung von 3D-Trainingsdaten aufgrund realer Daten sehr aufwendig ist. So ist es zwar möglich, vorhandene reale 3D-Daten zu annotieren. Dies erfordert aber die händische Auswahl von 3D-Datenpunkten und das händische Hinzufügen von Labeln. Für die Menge der für ein erfolgreiches Training benötigten Daten ist dies kaum in vertretbarer Zeit leistbar. Es erfordert ein hohes Maß an Fachwissen und ist fehleranfällig.

Stattdessen basiert das hier beschriebene Trainingsverfahren auf künstlich erzeugten, simulierten, 3D-Trainingsdaten. Für die Erzeugung der simulierten Lagerhallen stehen verschiedene Tools aus dem CAD-Bereich oder andere Simulationssoftware wie 3D-Physiksimulationen oder 3D-Game Engines zur Verfügung, mit denen virtuelle Lagerumgebungen geschaffen werden können, die eine Vielzahl von realistischen Szenarien und Hindernissen abbilden. Die Labels können während der Datenerzeugung miterstellt werden. Die Variation bei der Erzeugung der künstlichen Trainingsdaten wird auch unter den Stichworten "Domain Randomization" und "Data Augmentation" geführt, die besagen, dass die Varianz der Simulationen hinreichend groß gemacht wird und durch die Anwendung zufälliger Translationen, Rotationen, Skalierungen und Deformationen auf die Trainingsdaten, soweit sie in der Realität auch vorkommen, die Vielfalt der Daten erhöht werden und das Modell robuster gegenüber Domain Gaps gemacht werden kann.

In die virtuellen Lagerumgebungen kann dann eine Simulation einer 3D-Sensorvorrichtung, also beispielsweise einer 3D-LiDAR-Scanvorrichtung, einer TOF-Kamera o.ä., an einer oder mehreren Stellen in der simulierten Lagerumgebung platziert werden und 3D-Daten mit einer für die 3D-Sensorvorrichtung charakteristischen Verteilung der 3D-Datenpunkte erzeugt werden. So können bei einer 3D-LiDAR-Scanvorrichtung die Datenpunkte beispielsweise in einem sphärischen System erzeugt werden, bei einer TOF-Kamera wiederum mit Pixeln in einer rechteckigen Matrix, wobei die Tiefen- bzw. Abstandsinformationen jeweils als dritte Dimension hinzukommen. Die Berücksichtigung und Simulation der charakteristischen Verteilungen ist hilfreich, in dieser Hinsicht den sog. Domain Gap, auch Dataset Bias oder Domain Shift genannt, zwischen den Trainingsdaten und den später auszuwertenden realen Daten zu verringern, der aufgrund von Unterschieden in den Datenverteilungen auftreten kann. Die Verringerung dieser Diskrepanz hilft dabei, Einbrüche der Modellleistung zu vermeiden. Die Simulation der charakteristischen Verteilung kann auch die Einführung eines für die jeweilige 3D-Sensorvorrichtung charakteristischen Rauschens in die 3D-Daten umfassen.

Eine weitere Verringerung des Domain Gaps in dieser Hinsicht lässt sich auch erzielen, indem bei der Erzeugung der Trainingsdaten eine Variation der Anordnung und der Posen der 3D-Sensorvorrichtung am Flurförderzeug innerhalb vorgegebener Variationsbereiche ausgeführt wird. Damit wird die Kl-Instanz trainiert, auch bei Abweichungen der Pose oder Position der 3D-Sensorvorrichtung von einem Sollwert noch eine erfolgreiche semantische Segmentierung bzw. Klassifizierung der 3D-Datenpunkte durchzuführen. Hierdurch wird auch ermöglicht, Veränderungen in der Positionierung der 3D-Sensorvorrichtung zu erkennen.

In einem weiteren Aspekt erfolgt in Ausführungsformen das Supervised Learning in mehreren Trainingsschritten, wobei in einem ersten Trainingsschritt zunächst nur 3D-Trainingsdatenpunkte in einem ersten, begrenzten Aufnahmewinkelbereich, insbesondere von ±5° um einen zentralen Aufnahmewinkel α, zwischen der simulierten 3D-Sensorvorrichtung und dem simulierten Boden der simulierten Lagerhalle für das Training berücksichtigt werden und nach einer Stabilisierung des Trainingsergebnisses für den ersten Aufnahmewinkelbereich ein zweiter Trainingsschritt erfolgt, in dem 3D-Trainingsdatenpunkte aus einem zweiten Aufnahmewinkelbereich verwendet werden, der weiter ist als der erste Aufnahmewinkelbereich, wobei insbesondere ein oder mehr weitere Trainingsschritte mit sukzessive erweiterten Aufnahmewinkelbereichen folgen.

Dieser Aspekt des Trainingsverfahrens behebt ein Problem, das in einigen Fällen ein one-shot Training auf dem gesamten 3D-Datensatz unter Umständen nicht zu einer Konvergenz des Trainingsergebnisses führt. In einem solchen Fall versagt das Training. Dies ist in bestimmten Sensorkonfigurationen auf ein Domain Gap zurückzuführen, welches von bestimmten Parametern der einzelnen 3D-Datenpunkte in den 3D-Daten abhängt. Bei den hier betrachteten 3D-Daten ist beispielsweise die zentrale Sichtachse der 3D-Sensorvorrichtung schräg zum Boden. Dieser Aufnahmewinkel kann beispielsweise als α bezeichnet werden. In einem relativ engen Umkreis um die zentrale Sichtachse sind die Aufnahmewinkel ähnlich dem zentralen Aufnahmewinkel näher am Flurförderzeug und weiter von ihm weg unterscheiden sich die Aufnahmewinkel jedoch deutlich. Der vollständige 3D-Datensatz enthält somit eine große Bandbreite an Aufnahmewinkeln α, und das Domain Gap ist in den äußeren Bereichen größer als im zentralen Bereich, was dazu führen kann, dass das Training nicht konvergiert.

Dem wird dadurch begegnet, dass das Training in mehreren Schritten erfolgt und der das Domain Gap verursachende Parameter, in diesem Fall der Aufnahmewinkel α, zunächst in einem engen Bereich gehalten wird, in dem das Training konvergiert, und dann in einem oder mehreren weiteren Schritten bis zur vollständigen Abdeckung des gesamten Parameterbereichs geöffnet wird. Dadurch wird erreicht, dass das Training auch für die sukzessive größer werdenden Werte des Parameters noch konvergiert.

In Ausführungsformen kann der zentrale Aufnahmewinkel α zwischen der simulierten 3D-Sensorvorrichtung und dem simulierten Boden in den Trainingsdaten konstant gehalten werden. Dies betriff somit die Pose bzw. Neigung der 3D-Sensorvorrichtung in der Simulation. Alternativ kann die Neigung auch innerhalb vorgegebener Grenzen variiert werden. Hierzu kann es sinnvoll sein, das Training zunächst auf eine feste Neigung zu limitieren und anschließend Variationen der Neigung in das Training einzuschließen.

Die der Erfindung zugrundeliegende Aufgabe wird auch durch ein System zur Hinderniserkennung für ein Flurförderzeug mit einer Steuervorrichtung und einer 3D-Sensorvorrichtung, sowie gegebenenfalls zusätzlich einer Kamera, gelöst, wobei die Steuervorrichtung mittels einer Software ausgebildet ist, von einer 3D-Sensorvorrichtung erzeugte 3D-Daten sowie gegebenenfalls zusätzlich von der Kamera erzeugte 2D-Daten gemäß einem zuvor beschriebenen erfindungsgemäßen Verfahren zu verarbeiten.

Ein solches, vorzugsweise an einem Flurförderzeug verbautes System versetzt das Flurförderzeug in die Lage, eine robuste Hinderniserkennung sowie eine robuste Erkennung befahrbarer Flächen auszuführen und außerdem gegebenenfalls auch Dekalibrierungen der 3D-Sensorvorrichtung zu erkennen und darauf angemessen zu reagieren. Es verwirklicht somit die gleichen Eigenschaften, Merkmale und Vorteile wie das erfindungsgemäße Verfahren.

In Ausführungsformen ist die 3D-Sensorvorrichtung als LiDAR-Scanvorrichtung oder als TOF-Kamera ausgebildet. Sie kann auch als Stereokamera oder auf Radar oder Ultraschall basierend ausgebildet sein.

Weiter wird die der Erfindung zugrundeliegende Aufgabe auch durch ein Softwareprogramm mit Programmcodemitteln gelöst, welches bei Ausführung auf einer Steuervorrichtung eines zuvor beschriebenen erfindungsgemäßen Systems von einer 3D-Sensorvorrichtung des Systems erzeugte 3D-Daten sowie gegebenenfalls zusätzlich von einer oder der Kamera des Systems erzeugte 2D-Daten gemäß einem zuvor beschriebenen erfindungsgemäßen Verfahren verarbeitet.

Schließlich wird diese Aufgabe auch durch ein Flurförderzeug mit einem zuvor beschriebenen erfindungsgemäßen System zur Hinderniserkennung gelöst.

Das System, das Softwareprogramm und das Flurförderzeug verwirklichen somit die gleichen Eigenschaften, Merkmale und Vorteile wie das erfindungsgemäße Verfahren.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung eines Flurförderzeugs mit Sensorsystemen,
- Fig. 2: eine schematische Veranschaulichung einer ebenenbezogenen Hinderniserkennung,
- Fig. 3: eine schematische Veranschaulichung einer weiteren Ausführung einer Hinderniserkennung,
- Fig. 4: eine schematische Darstellung einer ersten Ausführungsform eines erfindungsgemäßen Verfahrens zur Hinderniserkennung,
- Fig. 5: eine schematische Veranschaulichung des Abgleichs von 3D-Daten mit einer 2D-Filtermaske,
- Fig. 6: eine schematische Darstellung einer zweiten Ausführungsform eines erfindungsgemäßen Verfahrens zur Hinderniserkennung,
- Fig. 7: eine schematische Darstellung eines Verfahrens zur Erzeugung von 3D-Trainingsdaten, und
- Fig. 8: eine schematische Darstellung eines Trainingsverfahrens, das auf den gemäß Fig. 7 erzeugten 3D-Trainingsdaten basiert.

In den Zeichnungen sind jeweils gleiche oder gleichartige Elemente und/oder Teile mit denselben Bezugsziffern versehen, so dass von einer erneuten Vorstellung jeweils abgesehen wird.

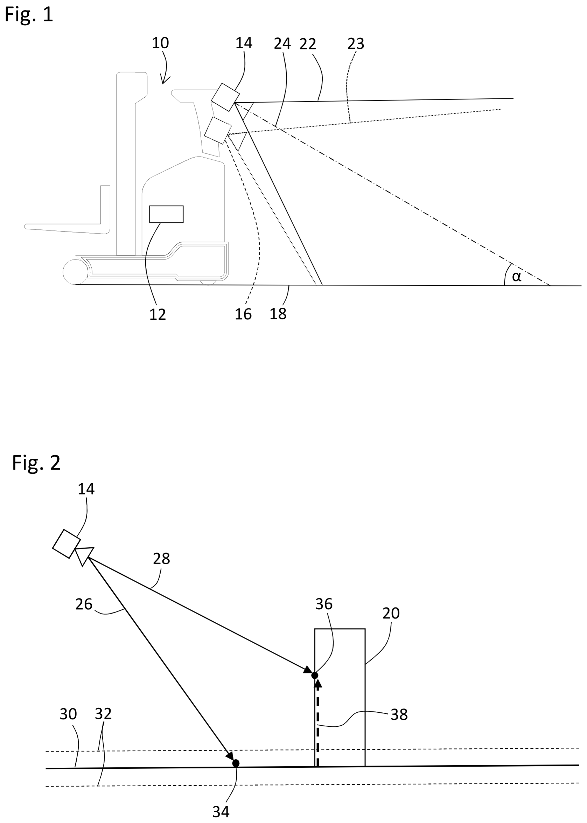

Fig. 1 zeigt eine schematische Darstellung eines Flurförderzeugs 10 mit Sensorsystemen und einer Steuervorrichtung 12. Ein erstes Sensorsystem ist eine 3D-Sensorvorrichtung 14, die beispielsweise als TOF-Kamera oder als 3D-LiDAR-Scanner ausgebildet sein kann. Diese ist an einer oberen Position am Flurförderzeug 10 angeordnet und überwacht einen Teil der Umgebung des Flurförderzeugs 10. Die 3D-Sensorvorrichtung 10 ist unter einem Winkel α nach unten geneigt, der zentrale Aufnahmewinkel zum Boden 18 entspricht dem Winkel α zwischen dem Boden und dem Zentrum 24 des Sichtfelds 22 der 3D-Sensorvorrichtung 14.

Optional, durch gestrichelte Linien angedeutet, kann auch eine bildgebende Kamera 16 vorhanden sein, die in der Nähe der 3D-Sensorvorrichtung 14 angeordnet ist und ein überlappendes Sichtfeld 23 hat, das mit dem Sichtfeld 22 der 3D-Sensorvorrichtung 14 wenigstens teilweise überlappt.

Fig. 2 stellt eine schematische Veranschaulichung einer ebenenbezogenen Hinderniserkennung dar. Durch die Positionierung der 3D-Sensorvorrichtung 14 am Flurförderzeug 10 ist die Lage des Bodens mit der befahrbaren Fläche 18 festgelegt. Valide 3D-Datenpunkte 34 liegen daher auf einer geschätzten Ebene 30, innerhalb eines Schwellenwerts 32, der beispielsweise aufgrund eines Sensorrauschens, üblichem Ruckeln des Flurförderzeug 10 und gegebenenfalls akzeptablen Größen von Unebenheiten festgelegt sein kann. Der Sichtstrahl 26 der 3D-Sensorvorrichtung 14 trifft beispielsweise auf die befahrbare Fläche 18 und liegt innerhalb des Schwellenwerts 32. Im Gegensatz dazu wird der Sichtstrahl 28 von einem Hindernis 20 blockiert und resultiert in einem Messpunkt 36, der eine Höhe 38 über der geschätzten Ebene 30 hat, die außerhalb des Schwellenwerts 32 liegt. Ein solcher 3D-Datenpunkt 36 ist mit einem nicht befahrbaren Hindernis zu assoziieren.

Diese einfache Analyse beruht rein auf geometrischen Erwägungen und beruht auf einer einmaligen Kalibrierung der 3D-Sensorvorrichtung 14. Die Analyse funktioniert allerdings nicht mehr zuverlässig, wenn die 3D-Sensorvorrichtung 14 durch einen Stoß oder dergleichen aus ihrer ursprünglichen Pose verkippt wird und die geschätzte Ebene 30 nicht mehr mit dem wahren Boden bzw. der befahrbaren Fläche 18 übereinstimmt. In dem Fall ist eine neue Kalibrierung notwendig.

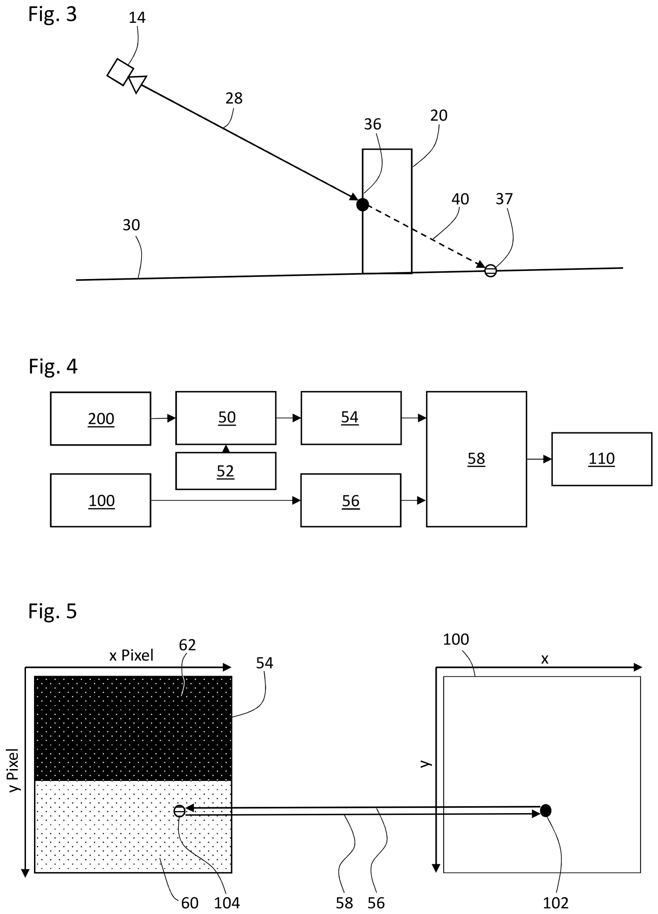

Fig. 3 zeigt eine schematische Veranschaulichung einer weiteren Ausführung einer Hinderniserkennung. In diesem Fall wird der Sichtstrahl 28, der am 3D-Messpunkt 36 am Hindernis 20 endet, auf seinen Schnittpunkt mit der geschätzten Ebene 30 der befahrbaren Fläche 18 projiziert und die Differenz 40 der erwarteten zur gemessenen Distanz berechnet. Sobald der Betrag dieser Differenz 40 oberhalb eines bestimmten Schwellenwerts liegt, wird festgestellt, dass der 3D-Messpunkt 36 an einem nicht befahrbaren Hindernis 20 liegt. Auch diese alternative Methode beruht auf rein geometrischen Erwägungen und ist auf die korrekte Kalibrierung der 3D-Sensorvorrichtung 14 angewiesen.

In Fig. 4 ist eine erste Ausführungsform eines erfindungsgemäßen Verfahrens zur Hinderniserkennung schematisch dargestellt. Dieses Ausführungsbeispiel beschreibt den Fall, in dem das Flurförderzeug 10 sowohl mit einer 3D-Sensorvorrichtung 14 als auch mit einer Kamera 16 ausgestattet ist, wie in Fig. 1 als Option dargestellt. In diesem Fall liefert die 3D-Sensorvorrichtung 14 im Betrieb des Flurförderzeug 10 laufend neue 3D-Daten 100, mit einer für die 3D-Sensorvorrichtung 14 typischen Wiederholungsrate, während die Kamera 16 mit einer für sie typischen Wiederholungsrate 2D-Bilddaten 200 der Umgebung an die Steuervorrichtung 12 des Flurförderzeug 10 liefert.

In der Steuervorrichtung 12 werden die 2D-Bilddaten 200 einem hierfür unter Verwendung eines annotierten 2D-Trainingsdatensatzes 52 trainierten Kl-Modell 50 als Eingangsdaten zugeführt, welches eine Klassifizierung, bzw. semantische Segmentierung der Bilddaten 200 in Bereiche vornimmt, die befahrbare Flächen einerseits und nicht befahrbare Hindernisse andererseits zeigen. Diese Segmentierung ergibt eine 2D-Filtermaske 54, in der jedem Pixel der 2D-Bilddaten 200 ein entsprechender Maskenwert für befahrbare Flächen bzw. für Hindernisse zugewiesen ist. Die 2D-Filtermaske 54 kann die gleiche Anzahl und Anordnung von Pixeln wie die 2D-Bilder der Kamera haben. Sie kann aber auch eine geringere Auflösung haben, so dass mehreren Pixeln der 2D-Bilder jeweils der gleiche Maskenwert zugeordnet wird. Die 2D-Filtermaske kann beispielsweise eine weitere Ebene der 2D-Bilddaten 200 sein, in den Metadaten der Bilder hinterlegt werden oder ein eigenständiges Datenobjekt sein.

Parallel erfolgt eine Transformation 56 der 3D-Datenpunkte 100 in das System der Kamera 16, wobei unter Verwendung der bekannten geometrischen Beziehungen zwischen der 3D-Sensorvorrichtung 14 und der Kamera 16 sowie unter Anwendung der Projektionsmatrix der Kameraoptik errechnet wird, in welchem Pixel der 2D-Bilddaten 200 der jeweilige 3D-Datenpunkt abgebildet werden würde.

Nach Erstellung bzw. Füllung der 2D-Filtermaske 54 und der Transformation 56 der 3D-Datenpunkte in das Kamerasystem erfolgt eine Filterung 58 der 3D-Datenpunkte, indem ihnen der jeweilige Maskenwert des entsprechenden im Transformationsschritt 56 ermittelten Pixels der 2D-Filtermaske 54 zugewiesen wird.

Die 2D-Filtermaske 54 und der Vorgang der Filterung 58 sind in Fig. 5 schematisch illustriert. Auf der linken Seite ist eine 2D-Filtermaske 54 symbolisch dargestellt. In deren oberen Hälfte befindet sich ein Hindernis 62, die Pixel der 2D-Filtermaske 54 haben einen entsprechenden Maskenwert und sind dunkel dargestellt. In der unteren Hälfte befindet sich eine befahrbare Fläche 60. Die entsprechenden Pixel der 2D-Filtermaske 54 haben einen entsprechenden Maskenwert und sind hell dargestellt.

In Fig. 5 rechts ist ein 3D-Tiefenbild 100 schematisch dargestellt. In diesem sind die 3D-Datenpunkte mit x-, y- und z-Werten dargestellt. Beispielhaft herausgegriffen ist ein 3D-Mess- bzw. -datenpunkt 102. Dieser wird aus dem 3D-Tiefenbild 100 in das System der Kamera 16 auf ein 2D-Pixel 104 der 2D-Filtermaske 54 transformiert bzw. projiziert. Diese Transformation 56 ist mit einem ersten Pfeil mit dem Bezugszeichen 56 kenntlich gemacht. Sobald das 2D-Pixel 104 identifiziert ist, wird umgekehrt (Pfeil 58) eine Filterung 58 auf den 3D-Datenpunkt 102 angewendet, indem diesem der Maskenwert der 2D-Filtermaske 54 an der Stelle des korrespondieren Pixels 104 zugewiesen wird. Das Ergebnis dieser Operation sind 3D-Daten 100, deren Datenpunkte das Ergebnis einer semantischen Segmentierung aufweisen, ohne dass diese semantische Segmentierung auf die 3D-Daten 100 selber direkt angewandt worden ist. Diese können nunmehr zur weiteren Verarbeitung und Steuerung des Flurförderzeugs 10 verwendet werden.

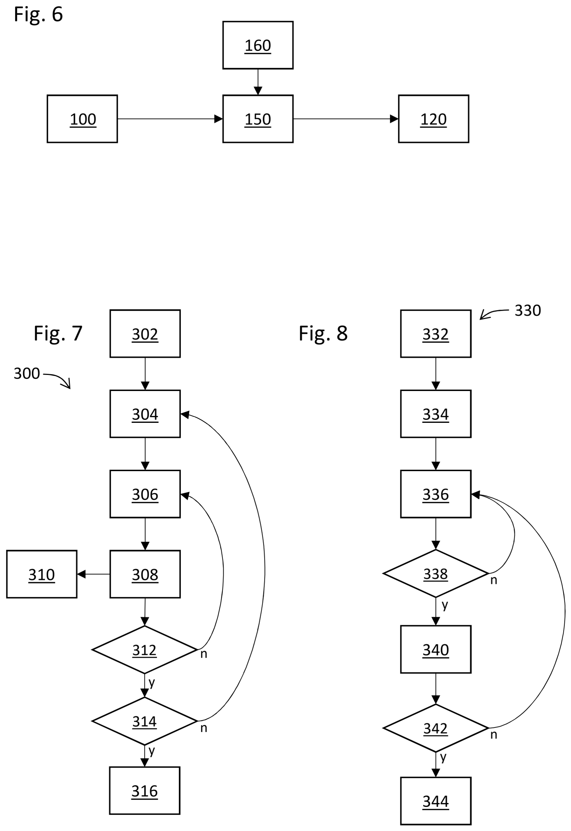

In Fig. 6 ist eine zweite Ausführungsform eines erfindungsgemäßen Verfahrens zur Hinderniserkennung schematisch dargestellt. In dieser Ausführungsform werden die 3D-Daten 100 direkt einer semantischen Segmentierung zugeführt. In diesem Fall erfolgt die semantische Segmentierung der 3D-Daten 100 mittels eines anderen KI-Modells 150, welches anhand eines geeigneten annotierten Trainingsdatensatzes 160 in einem dazu geeigneten Trainingsverfahren zur semantischen Segmentierung der 3D-Daten 100 trainiert worden ist. Beispiele für ein geeignetes Training des Kl-Modells 150 werden anhand der Figuren 8 und 9 erläutert.

Ein erster Schritt, der in Fig. 7 schematisch dargestellt ist, betrifft die Erzeugung geeigneter 3D-Trainingsdaten. Die Verwendung realer Sensordaten aus Lagerumgebungen ist schwierig, da die Notation der 3D-Punkte notorisch aufwendig ist und entsprechendes Fachwissen erfordert. Eine Notation kann daher im Wesentlichen nur händisch erfordern, sodass nur geringe Mengen an Trainingsdaten zur Verfügung stehen. Da ein entsprechendes KI-Modell typischerweise anhand eines bestimmten Verteilungsmusters der 3D-Punkte trainiert wird, die für eine bestimmte 3D-Sensorvorrichtung typisch ist, müsste bei Wechsel der 3D-Sensorvorrichtung der Vorgang vollständig von neuem mit neuen realen Daten wiederholt werden.

Ein der vorliegenden Offenbarung entsprechendes Verfahren 300 bedient sich der künstlichen Erzeugung von Trainingsdaten, was den Vorteil hat, dass dieses auch für verschiedene 3D-Sensorvorrichtungen mit unterschiedlichen Profilen wiederholt werden kann. Das Verfahren 300 zum Erzeugen von 3D-Trainingsdaten 160 beginnt mit einem Start 302, welcher eine oder mehrere ineinander verschachtelte Schleifen startet. Im ersten Schritt 304 der ersten Schleife wird eine simulierte Lagerhalle erzeugt. Dies kann mit automatisierten CAD-Programmen erfolgen oder auch mit vergleichbaren Programmen 3D-Physiksimulationen oder Game Engines. Bei der automatisierten Erzeugung kann beispielsweise auf eine Bibliothek von in Lagerumgebungen verwendeten Gegenständen wie Regalen, Paletten, anderen Flurförderzeugen, Menschen etc. zurückgegriffen werden, die mehr oder weniger zufällig in der Lagerumgebung verteilt werden. Dabei können auch Regeln eingeführt und eingehalten werden, die in typischen Lagerumgebungen auch vorkommen wie beispielsweise, dass Lagerregale typischerweise im parallelen Reihen angeordnet sind und beispielsweise senkrecht oder parallel zu den Wänden einer Lagerhalle ausgerichtet sind. Außerdem können Rampen simuliert werden, die zwischen verschiedenen Ebenen der Lagerumgebung vorhanden sein können und von dem Flurförderzeug ebenfalls befahren werden sollen. Ein Vorteil einer solchen automatisierten Erzeugung ist, dass den verschiedenen Objekten und Flächen bereits Objektkenner zugewiesen sind, sodass diese eindeutig identifizierbar sind und beispielsweise als nicht befahrbar oder befahrbar gekennzeichnet werden können.

Im darauffolgenden Schritt 306 wird eine simulierte 3D-Sensorvorrichtung 14, gegebenenfalls an einem simulierten Flurförderzeugs 10, in der im Schritt 304 erzeugten simulierten Lagerumgebung platziert, und zwar in einer Weise, die vorzugsweise nicht mit einem Hindernis kollidiert. Dafür kann eine typische Aufnahmecharakteristik der 3D-Sensorvorrichtung simuliert werden mit einer typischen Verteilung, die sich beispielsweise zwischen LiDAR-Scannern und TOF-Kameras unterscheidet. Es kann auch simuliert werden, dass eine solche 3D-Sensorvorrichtung 14 an unterschiedlichen Orten an einem Flurförderzeug 10 angeordnet ist. Auch die Ausrichtung der Anbringung am Flurförderzeug 10 kann gegebenenfalls variiert werden. Die Simulation der 3D-Sensorvorrichtung 14 kann auch typisches Sensorrauschen und Unschärfen der aufgenommenen 3D-Daten umfassen.

Im anschließenden Schritt 308 liegen sämtliche notwendigen Informationen bezüglich der simulierten Lagerumgebung und der 3D-Sensorvorrichtung 14 innerhalb der simulierten Lagerumgebung vor und es wird ein annotierter 3D-Datensatz erzeugt, der 3D-Daten Punkte enthält, die die simulierte 3D-Sensorvorrichtung 14 entsprechend ihrer Anordnung, Ausrichtung und ihren weiteren simulierten Eigenschaften in der simulierten Lagerumgebung aufnehmen würde. Die 3D-Datenpunkte dieses Datensatzes werden mittels Raytracing erzeugt, so dass bekannt ist, an welchem Objekt der simulierten Lagerumgebung der jeweiligen Sichtstrahlen auftrifft, ob also eine befahrbare Fläche, also Boden oder Rampen, oder ein Hindernis erfasst wurde. Diese Information wird den 3D-Datenpunkten des 3D-Datensatzes mitgegeben, also in Relation zu den entsprechenden Datenpunkten gespeichert. Dieser Datensatz stellt somit eine einzelne annotierte Simulation von realitätsnahen 3D-Daten dar und wird anschließend im Schritt 310 in eine Trainingsdatenbasis eingeschrieben, in der eine Vielzahl entsprechender Datensätze gespeichert werden.

Im anschließenden Schritt 312 erfolgt eine Fallunterscheidung, ob innerhalb der im Schritt 304 erzeugten simulierten Lagerumgebung eine ausreichende Anzahl verschiedener Positionen der 3D-Sensorvorrichtung 14 erzeugt und damit simulierte 3D-Datensätze erzeugt worden sind. Hierfür kann eine Anzahl vorgegeben werden, beispielsweise zwischen 5 und 20. Wenn diese Anzahl noch nicht erreicht ist, springt das Verfahren 300 zum Verfahrensschritt 306 zurück und die simulierte 3D-Sensorvorrichtung 14 wird an einer neuen Position in der bereits vorhandenen simulierten Lagerumgebung angeordnet und ein neuer 3D-Datensatz erzeugt (Schritt 308), der wiederum in die Trainingsdatenbasis eingeschrieben wird (Schritt 310). Dies erfolgt solange, bis die vorbestimmte Anzahl von Datensätzen pro Lagerumgebung erreicht ist. Es kann aber auch vorgegeben sein, dass für jede Lagerumgebung nur eine einzelne Ansicht erzeugt wird. In diesem Fall entfällt die Schleife vom Schritt 312 zum Schritt 306.

Ist die erforderliche Anzahl erreicht, so erfolgt im Schritt 314 eine weitere Fallunterscheidung. Diese fragt danach, ob eine vorgegebene Anzahl von simulierten Lagerumgebungen erreicht worden ist. Die Anzahl der vorgegebenen zu simulierenden Lagerumgebungen ist typischerweise deutlich größer als die Anzahl der in einer simulierten Lagerumgebung zu verwendenden verschiedenen Positionen der 3D-Sensorvorrichtung. Es kann sich dabei um einige hundert bis einige tausend simulierte Lagerumgebungen handeln. Ist diese Anzahl noch nicht erreicht, so springt das Verfahren zum Schritt 304 zurück und es wird eine neue Lagerumgebung in der Simulation erzeugt und die innere Schleife wird für die neue simulierte Lagerumgebung ausgeführt. Dies erfolgt, bis die Anzahl der vorgegebenen zu erzeugenden simulierten Lagerumgebungen erreicht ist. In dem Fall endet das Programm (Schritt 316). Die Trainingsdatenbasis 160 enthält dann L x P Datensätze, wobei L für die Anzahl der simulierten Lagerhallen und P für die Anzahl der simulierten Positionen der 3D-Sensorvorrichtung pro Lagerhallte steht. Diese Trainingsdatenbasis 160 kann zum Training des Kl-Modells 150 eingesetzt werden.

Die im Verfahren 300 erzeugte Trainingsdatenbasis 160 bildet auch die Grundlage für das in Fig. 8 schematisch dargestellte Ausführungsbeispiel eines Trainingsverfahrens 330. Hierbei wird berücksichtigt, dass es schwierig sein kann, das KI-Modell 150 direkt auf den vollständigen Datensätzen der Trainingsdatenbasis 160 zu trainieren, weil festgestellt wurde, dass ein solches Training unter Umständen nicht konvergiert. Daher wird nach dem Start im Schritt 332 im Schritt 334 ein Start-Winkelbereich für die für das Training zu verwendenden 3D-Daten der Datensätze festgelegt. Hierbei kann es sich beispielsweise um den Winkelbereich von ±5° um das Zentrum 24 des Sichtfelds der 3D-Sensorvorrichtung 14 handeln. Dieser kleine Winkelbereich hilft dabei, den Domain Gap klein zu halten, so dass das überwachte Training auf diesem stark limitierten Teil der Trainingsdatenbasis 160 konvergieren kann. Das Training an sich kann in an sich bekannter Weise erfolgen, wobei das KI-Modell 150 in einem iterativen Prozess trainiert wird, die semantische Segmentierung in befahrbare Bereiche und nicht befahrbare Hindernisse durchzuführen und dabei die entsprechende Annotation der 3D-Trainingsdaten möglichst fehlerfrei zu reproduzieren.

Sobald der Anfangs-Winkelbereich bestimmt ist, beginnt mit dem Schritt 336 eine Schleife, in der das KI-Modell 150 mit 3D-Trainingsdaten trainiert wird, die in den bestimmten Winkelbereich fallen. 3D-Daten, die außerhalb des bestimmten Winkelbereich fallen, werden noch nicht beim Training berücksichtigt. Im Schritt 338 erfolgt eine Fallunterscheidung. Dabei wird überprüft, ob das Training zu einer Konvergenz geführt hat, dass die Trainingsergebnisse also über zwei oder mehrere Iterationen des Trainings stabil sind. Ferner wird überprüft, ob vorgegebene Qualitätsmaßstäbe für die Reproduktion der Notation der Trainingsdatenpunkte erreicht worden sind. Wenn dies noch nicht der Fall ist, wird eine weitere Iteration des Schrittes 336 durchgeführt.

Wurde jedoch Konvergenz des Trainings erreicht und werden die Qualitätsmaßstäbe erreicht, so wird im Schritt 340 der Winkelbereich der für das Training zu verwendenden Datenpunkte vergrößert. Es wird dann im Schritt 342 in einer Fallunterscheidung geprüft, ob eine maximale Anzahl von Erweiterungsschritten erreicht ist, oder ob ein maximaler Winkelbereich erreicht wurde und mit diesem auch schon bereits trainiert wurde. Wenn das noch nicht der Fall war, erfolgt das Training des Schrittes 336 mit dem erweiterten Trainingsdatensatz. Die Erweiterung des Winkelbereichs kann in einem oder mehreren Schritten erfolgen. Wenn dann das Training mit dem vollständigen Trainingsdatensatz erfolgreich absolviert wurde, findet das Verfahren 330 ein Ende (Schritt 344).

Der Vorteil des mehrschrittigen Verfahrens 330 ist, dass das im ersten Schritt auf dem auf den Anfangswinkelbereich limitierten Trainingsdatensatz erlangte Wissen über die semantische Segmentierung in einem oder mehreren weiteren Schritten ausgedehnt werden kann. Dadurch fällt ein unter Umständen weiterhin vorhandener Domain Gap beim Training nicht mehr so stark ins Gewicht und das Training kann auch bei den nachfolgenden weiteren Winkelbereichen wiederum korrigieren und zu einer Qualität der semantischen Segmentierung führen, die den voreingestellten Qualitätsparametern kündigt.

Verschiedene Testszenarien sind in den folgenden Figuren 10 bis 12 illustriert.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 10: Flurförderzeug
- 12: Steuervorrichtung
- 14: 3D-Sensorvorrichtung
- 16: Kamera
- 18: befahrbare Fläche
- 20: Hindernis
- 22: Sichtfeld der 3D-Sensorvorrichtung
- 23: Sichtfeld der Kamera
- 24: Zentrum des Sichtfelds
- 26, 28: Sichtstrahlen der 3D-Sensorvorrichtung
- 30: geschätzte Ebene
- 32: ±Schwellenwert
- 34: Messpunkt auf geschätzter Ebene
- 36: Messpunkt außerhalb geschätzter Ebene
- 37: erwarteter Messpunkt
- 38: Höhe des Messpunkts über der geschätzten Ebene
- 40: Differenz der erwarteten zum gemessenen Distanz
- 50: KI-Modell
- 52: annotierter 2D-Trainingsdatensatz
- 54: 2D-Filtermaske
- 56: Transformation zwischen 3D-Daten und 2D-Daten
- 58: Filterung der 3D-Daten mit 2D-Filtermaske
- 60: befahrbare Fläche
- 62: Hindernis
- 100: 3D-Daten
- 102: 3D-Messpunkt
- 104: 2D-Pixel nach Transformation in 2D
- 110: gefilterte 3D-Daten
- 120: gefilterte 3D-Daten
- 150: KI-Modell
- 160: Trainingsdatensatz
- 200: 2D-Bilddaten
- 202: projizierter Messpunkt
- 300: Verfahren zum Erzeugen von 3D-Trainingsdaten
- 302: Start
- 304: Erzeugen einer simulierten Lagerhalle
- 306: Platzieren einer simulierten 3D-Sensorvorrichtung
- 308: Erzeugen eines annotierten 3D-Datensatzes
- 310: Schreiben des Datensatzes in die Trainingsdatenbasis
- 312: Max. Anzahl der 3D-Datensätze der Lagerhalle?
- 314: Max. Anzahl Lagerhallen?
- 316: Ende
- 330: Verfahren zum Trainieren eines Kl-Modells
- 332: Start
- 334: Auswahl eines Start-Winkelbereichs
- 336: Trainieren mit 3D-Trainingsdaten aus dem Winkelbereich
- 338: Konvergenz erreicht?
- 340: Winkelbereich vergrößern
- 342: maximaler Winkelbereich erreicht?
- 344: Ende
- α: Aufnahmewinkel

## Patentansprüche

1. Verfahren zur Hinderniserkennung für ein Flurförderzeug (10) mit einer Steuervorrichtung (12) und einer 3D-Sensorvorrichtung (14), die während des Betriebs des Flurförderzeugs (10) 3D-Daten (100) mit einer Mehrzahl von 3D-Datenpunkten von Teilen der Umgebung des Flurförderzeugs (10) aufnimmt und diese an die Steuervorrichtung (12) übermittelt, wobei die Steuervorrichtung (12) die 3D-Daten (100) einerseits in 3D-Datenpunkte unterteilt, die eine Position oder Positionen befahrbarer Flächen (18) darstellen und andererseits in solche 3D-Datenpunkte, die eine Position oder Positionen nicht befahrbarer Hindernisse (20) darstellen, wobei das Flurförderzeug (10) so betrieben wird, dass es nicht befahrbare Hindernisse (20) vermeidet.

2. Verfahren nach Anspruch 1, **dadurch gekennzeichnet, dass** eine Kamera (16), insbesondere eine RGB-Kamera, die in einer bekannten Positionsbeziehung relativ zur 3D-Sensorvorrichtung (14) am Flurförderzeug (10) angeordnet ist, 2D-Bilder von Teilen der Umgebung des Flurförderzeugs (10) aufnimmt, welche wenigstens teilweise auch von der 3D-Sensorvorrichtung (14) aufgenommen werden, und die 2D-Bilder (200) an die Steuervorrichtung (12) übermittelt, und die Steuervorrichtung (12) die folgenden Schritte ausführt:
- Erstellen einer 2D-Filtermaske (54) durch eine semantische Segmentierung der 2D-Bilder (200) in Bereiche, die einerseits die befahrbaren Flächen (18) und andererseits die nicht befahrbaren Hindernisse (20) darstellen, mittels einer dazu trainierten Instanz einer künstlichen Intelligenz (50), insbesondere eines neuronalen Faltungsnetzwerks (CNN), wobei jedem Pixel der 2D-Filtermaske (54) entsprechend einem Ergebnis der semantischen Segmentierung für das entsprechende Pixel ein einer befahrbaren Fläche (18) oder ein einem nicht befahrbaren Hindernis (20) entsprechender Maskenwert zugewiesen wird, und
- Übertragen der semantischen Segmentation auf die 3D-Daten (100), wobei für jeden 3D-Datenpunkt aus den aufgenommenen 3D-Daten der Umgebung des Flurförderzeugs (10) unter Verwendung der bekannten Positionsbeziehung zwischen der Kamera (16) und der 3D-Sensorvorrichtung (14) am Flurförderzeug (10) sowie bekannten Abbildungseigenschaften der Kamera (16) zurückprojiziert wird, in welchem Pixel eines zeitlichen entsprechenden von der Kamera (16) aufgenommenen 2D-Bildes (200) der jeweilige 3D-Datenpunkt abgebildet würde, und dem jeweiligen 3D-Datenpunkt der Maskenwert des so ermittelten Pixels der 2D-Filtermaske (54) zugewiesen wird.

3. Verfahren nach Anspruch 1, insbesondere nach Anspruch 2, **dadurch gekennzeichnet, dass**, insbesondere zusätzlich, die 3D-Daten (100) der 3D-Sensorvorrichtung (14) als Eingangsdaten, insbesondere in Form von Punktwolken, in ein neuronales Netz (150) eingespeist werden, welches eine semantische Segmentierung der 3D-Daten (100) in 3D-Datenpunkte befahrbarer Flächen (18) und in 3D-Datenpunkte von nicht befahrbaren Hindernissen (20) ausführt, wobei das neuronale Netz (150) insbesondere in einem Verfahren (330) nach einem der Ansprüche 8 bis 10 trainiert worden ist.

4. Verfahren nach einem der Ansprüche 1 bis 3, **dadurch gekennzeichnet, dass** nur solche 3D-Datenpunkte, die eine Position oder Positionen von nicht befahrbaren Hindernissen (20) darstellen, an ein System oder eine Funktion zur Hindernisauswertung weitergeleitet werden.

5. Verfahren nach Anspruch 4, **dadurch gekennzeichnet, dass** einem Hindernis (20) entsprechende 3D-Datenpunkte mit einem übergeordneten System oder mit übergeordneter Funktion verarbeitet werden, insbesondere zum Vergleich mit vordefinierten Schutzvolumina.

6. Verfahren nach einem der Ansprüche 1 bis 5, **dadurch gekennzeichnet, dass** die als befahrbare Flächen (18) zugehörig erkannten 3D-Datenpunkte daraufhin ausgewertet werden, ob sich die Position oder Pose der 3D-Sensorvorrichtung (14) am Flurförderzeug (10) gegenüber früheren Aufnahmen geändert hat.

7. Verfahren nach einem der Ansprüche 1 bis 6, **dadurch gekennzeichnet, dass** der Betrieb des Flurförderzeugs (10) so, dass es nicht befahrbare Hindernisse (20) vermeidet, umfasst, dass bei einem fahrergesteuerten Flurförderzeug (10) eine akustische und/oder optische Warnung an den Fahrer erzeugt wird oder eine direkte Fahrzeugsteuerung, insbesondere Bremsung oder Umfahrung, erfolgt, oder bei einem fahrerlosen Flurförderzeug (10) eine direkte Fahrzeugsteuerung, insbesondere Bremsung oder Umfahrung, erfolgt.

8. Verfahren zum Trainieren eines neuronalen Netzes (150), insbesondere zur Verwendung in einem Verfahren nach Anspruch 3, wobei ein Supervised Learning anhand von künstlich erzeugten und gelabelten 3D-Trainingsdaten (160) stattfindet, wobei zur Erzeugung der 3D-Trainingsdaten (160) wiederholt Lagerhallen mit in den Lagerhallen in verschiedenen Konfigurationen verteilten Objekten und Strukturen simuliert werden, die insbesondere in realen Lagerhallen vorkommen, wobei 3D-Trainingsdatensätze mit 3D-Trainingsdatenpunkten jeweils mittels einer Simulation einer in der jeweiligen simulierten Lagerhalle, und insbesondere an einem simulierten Flurförderzeug (10), mit wechselnden Positionen und/oder Posen positionierten 3D-Sensorvorrichtung (14) entsprechend einer an einem realen Flurförderzeug (10) vorhandenen 3D-Sensorvorrichtung (14) erzeugt werden, wobei die künstlich erzeugten 3D-Trainingsdatenpunkte entsprechend einer Eigenschaft, insbesondere einem Objekt-Identifkator, gelabelt werden, die einen Rückschluss darauf erlaubt, ob die 3D-Trainingsdatenpunkte von einem simulierten Hindernis-Objekt oder einer simulierten befahrbaren Fläche stammen.

9. Verfahren nach Anspruch 8, **dadurch gekennzeichnet, dass** das Supervised Learning in mehreren Trainingsschritten erfolgt, wobei in einem ersten Trainingsschritt zunächst nur 3D-Trainingsdatenpunkte in einem ersten, begrenzten Aufnahmewinkelbereich, insbesondere von ±5° um einen zentralen Aufnahmewinkel α, zwischen der simulierten 3D-Sensorvorrichtung (14) und dem simulierten Boden der simulierten Lagerhalle für das Training berücksichtigt werden und nach einer Stabilisierung des Trainingsergebnisses für den ersten Aufnahmewinkelbereich ein zweiter Trainingsschritt erfolgt, in dem 3D-Trainingsdatenpunkte aus einem zweiten Aufnahmewinkelbereich verwendet werden, der weiter ist als der erste Aufnahmewinkelbereich, wobei insbesondere ein oder mehr weitere Trainingsschritte mit sukzessive erweiterten Aufnahmewinkelbereichen folgen.

10. Verfahren nach Anspruch 8 oder 9, **dadurch gekennzeichnet, dass** der zentrale Aufnahmewinkel α zwischen der simulierten 3D-Sensorvorrichtung (14) und dem simulierten Boden in den Trainingsdaten konstant gehalten wird.

11. System zur Hinderniserkennung für ein Flurförderzeug (10) mit einer Steuervorrichtung (12) und einer 3D-Sensorvorrichtung (14), sowie gegebenenfalls zusätzlich einer Kamera (116), wobei die Steuervorrichtung (12) mittels einer Software ausgebildet ist, von einer 3D-Sensorvorrichtung (14) erzeugte 3D-Daten (100) sowie gegebenenfalls zusätzlich von der Kamera (16) erzeugte 2D-Daten (200) gemäß einem Verfahren nach einem der Ansprüche 1 bis 7 zu verarbeiten.

12. System nach Anspruch 11, **dadurch gekennzeichnet, dass** die 3D-Sensorvorrichtung (14) als LiDAR-Scanvorrichtung oder als TOF-Kamera ausgebildet ist.

13. Softwareprogramm mit Programmcodemitteln, welches bei Ausführung auf einer Steuervorrichtung (12) eines Systems nach Anspruch 11 oder 12 von einer 3D-Sensorvorrichtung (14) des Systems erzeugte 3D-Daten (100) sowie gegebenenfalls zusätzlich von einer oder der Kamera (16) des Systems erzeugte 2D-Daten (200) gemäß einem Verfahren nach einem der Ansprüche 1 bis 7 verarbeitet.

14. Flurförderzeug (10) mit einem System zur Hinderniserkennung nach Anspruch 11 oder 12.
